# EUROPEAN PATENT APPLICATION

(11) **EP 2 733 592 A2**
(43) Date of publication of application: **21.05.2014**
(21) Application number: 13192725.3
(22) Date of filing: 13.11.2013
(51) Int. Cl.: G06F 3/0481, G06F 3/0482, G06F 1/16, H04M 1/02

(54) **Method for arranging a list in a flexible display and electronic device thereof**

(30) Priority: 14.11.2012 KR 20120128755
(71) Applicant: Samsung Electronics Co., Ltd, Gyeonggi-do 443-742 (KR)
(72) Inventor: Jeon, Yu-Jeong, Seoul (KR); Kim, Han-Jib, Gyeonggi-do (KR); Baek, Seok-Jun, Gyeonggi-do (KR); Song, Ga-Jin, Gyeonggi-do (KR)
(74) Representative: Nederlandsch Octrooibureau

(57) **Abstract**

A method for arranging a list and an electronic device thereof are provided. The method for arranging the list of the electronic device includes displaying the list in a flexible display, detecting a change of a screen area displayed in the flexible display, and if the screen area is enlarged, displaying an additional list according to the enlarged area of the screen.

## Description

### TECHNICAL FIELD

The present disclosure relates to an electronic device. More particularly, the present disclosure relates to a method for arranging a list in an electronic device having a flexible display and the electronic device thereof.

### BACKGROUND

With the rapid development of electronic devices, e.g., a smart phone, a tablet Personal Computer (PC), etc., an electronic device capable of wireless voice telephony and information exchange has become commonly used in everyday life. In addition, since a size of the electronic device is gradually decreased while a display size is increased, there is a growing need for a new display device. Accordingly, development is ongoing on a flexible display which may be bent like paper by using a flexible material and which may maintain a display function even after the flexible display is bent.

The flexible display may change an area of a to-be-displayed screen of the display device under a user control. For one example, if the flexible display is folded in half under the user control, a size of a screen region is decreased by half. In this case, as the display screen region is reduced, there is a case where the electronic device cannot fully display a User Interface/User experience (UI/UX) originally displayed before the display screen region is reduced. For another example, if the flexible display is unfolded from a state of being folded in half under the user control, then the display screen region is enlarged to be twice its original size. In this case, as the display screen region is enlarged, there is a case where the electronic device displays the UI/UX, which is originally displayed before the display screen region is enlarged, on the enlarged display screen region without alteration, which leads to waste of a display space. Accordingly, there is a need to provide a UI/UX which is changed flexibly on the basis of a change in a screen area of a flexible display in an electronic device.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and apparatus for arranging a list in an electronic device having a flexible display.

Another aspect of the present disclosure is to provide a method and apparatus for detecting a change in a screen area of a flexible display in an electronic device having the flexible display.

Another aspect of the present disclosure is to provide a method and apparatus for arranging a list on a basis of a change in a screen area of a flexible display in an electronic device having the flexible display.

Another aspect of the present disclosure is to provide a method and apparatus in which, when a screen area of a flexible display is enlarged in an electronic device having the flexible display, an additional list is displayed in an enlarged region.

Another aspect of the present disclosure is to provide a method and apparatus in which, when a screen area of a flexible display is enlarged in an electronic device having the flexible display, additional information on a currently displayed list on the enlarged area is displayed in an enlarged region.

Another aspect of the present disclosure is to provide a method and apparatus in which, when a screen area of a flexible display is reduced in an electronic device having the flexible display, a displayed list is displayed by reducing a size of the displayed list on the basis of the reduced screen area of the flexible display.

In accordance with an aspect of the present disclosure, a method for controlling an electronic device is provided. The method includes displaying a list in a flexible display, detecting a change of a screen area displayed in the flexible display, and if the screen area is enlarged, displaying an additional list according to the enlarged area of the screen.

In accordance with another aspect of the present disclosure, an electronic device is provided. The apparatus includes one or more processors, a flexible display, a memory, and one or more programs stored in the memory and configured to be executed by the one or more processors, wherein the one or more programs include an instruction for displaying a list in a flexible display, an instruction for detecting a change in a screen area displayed in the flexible display, and if the displayed screen area is enlarged, an instruction for displaying an additional list according to the enlarged area of the screen.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of various embodiments of the present disclosure will be more apparent from the following description taken in conjunction with the accompanying drawings, in which:
FIG. 1A is a block diagram illustrating a structure of an electronic device for arranging a list on the basis of a change in a screen area of a flexible display according to an embodiment of the present disclosure;
FIG. 1B is a block diagram illustrating a structure of a processor for arranging a list on the basis of a change in a screen area of a flexible display according to an embodiment of the present disclosure;
FIG. 2A is a flowchart illustrating a process of displaying an additional list when a screen area of a flexible display is enlarged in an electronic device according to an embodiment of the present disclosure;
FIG. 2B illustrates a diagram of elements of an electronic device for displaying an additional list when a screen area of a flexible display is enlarged in an electronic device according to an embodiment of the present disclosure;
FIGS. 3A and 3B are flowcharts illustrating a process of displaying information based on a change in a screen area of a flexible display in an electronic device according to an embodiment of the present disclosure;
FIG. 4 illustrates an example of determining a list and a screen area of a flexible display according to an embodiment of the present disclosure;
FIGS. 5A and 5B illustrate an example of a case where an enlarged screen area of a flexible display is less than a reference area in an electronic device according to an embodiment of the present disclosure;
FIG. 6 illustrates an example of a case where an enlarged screen area of a flexible display is greater than a reference area in an electronic device according to an embodiment of the present disclosure;
FIG. 7 illustrates an example of displaying an additional list when a screen area of a flexible display is enlarged in an electronic device according to an embodiment of the present disclosure;
FIG. 8 illustrates an example of updating a list on the basis of a drag when a screen area of a flexible display is enlarged in an electronic device according to an embodiment of the present disclosure;
FIG. 9 illustrates another example of updating a list on the basis of a drag when a screen area of a flexible display is enlarged in an electronic device according to an embodiment of the present disclosure;
FIGS. 10, 11, 12, and 13 illustrate an example of displaying an additional list when a folded flexible display is unfolded in an electronic device according to an embodiment of the present disclosure;
FIG. 14 illustrates an example of displaying an additional list when a rolled flexible display is unrolled in an electronic device according to another embodiment of the present disclosure; and
FIGS. 15, 16, and 17 illustrate an example of displaying an additional list when a folded flexible display is unfolded in an electronic device in which a thumbnail image list and an icon list are displayed according to another embodiment of the present.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the following description, an electronic device may refer to a device having a flexible display or a flexible display unit, for example, a mobile communication terminal, a smart phone, a tablet Personal Computer (PC), a Motion Picture Experts Group (MPEG) Layer 3 (MP3) player, a navigator, or any other similar and/or suitable electronic device. Herein, the flexible display may refer to a display unit which may be physically curved or bent. In addition, in the following description, a list may refer to all lists provided by and/or displayed on the electronic device. Examples of the list include a music list, a video list, an icon list, an application list, a folder list, a photo list, a thumbnail list, a bookmark list, an item list, a menu list, a system configuration list, a dialog list, a text list, a phone number list, and any other similar and/or suitable type of list.

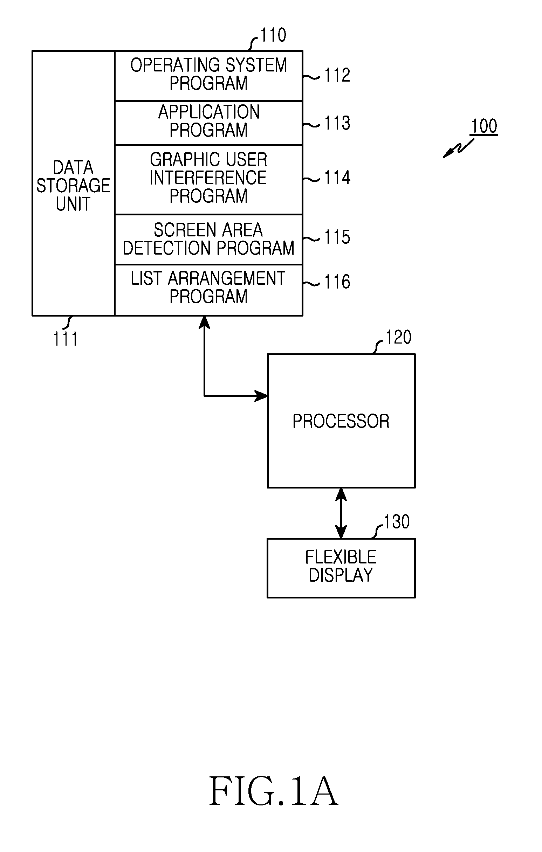

FIG. 1A is a block diagram illustrating a structure of an electronic device for arranging a list on the basis of a change in a screen area of a flexible display according to an embodiment of the present disclosure.

Referring to FIG. 1A, an electronic device 100 includes a memory 110, a processor 120, and a flexible display 130. The memory 110 and the processor 120 may be plural in number.

The memory 110 includes a data storage unit 111, an operating system program 112, an application program 113, a graphic user interference program 114, a screen area detection program 115, and a list arrangement program 116. However, the present disclosure is not limited thereto, and the memory 110 may include any type of similar and/or suitable information that may be stored on the electronic device 100. In addition, since a program, which may be a software component, can be expressed in a group of instructions, the program may also be expressed in an instruction set. The program may also be expressed in a module. The memory 110 may store one or more programs including instructions and/or modules for executing the embodiment of the present disclosure.

The data storage unit 111 stores data generated while performing a function corresponding to the program stored in the memory 110. The data storage unit 111 of the present disclosure may store a sub-list for each item of the list. For example, the data storage unit 111 may store information indicating that a sub-list of a display setting item is a brightness setting, a screen mode setting, a text size setting, a font setting, or any similar and/or suitable setting. For another example, the data storage unit 111 may store information indicating that a sub-list of a sound setting item is a volume setting, a bell sound setting, a vibration setting, a button sound setting, or any similar and/or suitable setting. In addition, the data storage unit 111 may store additional information for each item of the list. For example, the data storage unit 111 may store a volume setting bar as additional information of a sound item. For another example, the data storage unit 111 may store a data usage amount as additional information of a data usage item. For another example, the data storage unit 111 may store an application type, an install date, a usage frequency, and any similar and/or suitable information, as additional information of an application item, and may store a photo shooting date, a photo size, a photo shooting place, and any similar and/or suitable information, as additional information of a photo item.

The operating system program 112, such as a built-in or installed operating system such as WINDOWS, LINUX, Darwin, RTXC, UNIX, OS X, VxWorks, and any other similar and/or suitable operating system, includes various software components for controlling a general system operation. For example, the control of the general system operation includes memory management and control, storage hardware and/or device control and management, power control and management, or any other similar and/or suitable system operation. The operating system program 112 performs a function for facilitating communication between various hardware components and devices and software components, programs, instructions, and modules.

The application program 113 may be a browser, an email, a message, a word processor, an address book, a widget, a Digital Rights Management (DRM) function, voice recognition, voice recording, a position determining function, a location based service, a telephone, or any other similar and/or suitable application, operation, and function.

The graphic user interface program 114 may be at least one software component for providing a graphic-based user interface between the user and the electronic device 100. That is, the graphic user interface program 114 may include at least one software component for displaying user interface information on the flexible display 130. According to the present disclosure, the graphic user interface program 114 may include an instruction for displaying a list including one or more items in the flexible display 130. For example, the graphic user interface program 114 may include an instruction for displaying a system setting list including items such as a sound, a display, a data usage, a background screen, a security in the flexible display 130, and any other similar and/or suitable item for display on the flexible display 130.

In addition, the graphic user interface program 114 may include an instruction for displaying an additional list according to a change in a screen area and/or size displayed in the flexible display 130. Herein, the additional list may be a list which is not displayed in the flexible display 130 before the screen area displayed in the flexible display 130 is enlarged. Hereinafter, an area of the display screen may be referred to as a 'screen area' for convenience of explanation. For example, if the screen area of the flexible display 130 is enlarged in a state where a list, including items A, B, C, D, E, and F, is displayed, then the graphic user interface program 114 may additionally display a list including next items, i.e., items G, H, I, J, K, and L, in an enlarged region.

In addition, the graphic user interface program 114 may include an instruction for displaying additional information according to the enlarged screen area of the flexible display 130. In this case, as representative information on each item included in a list is being displayed, then the additional information may be determined in a design stage or may be modified by a user. For example, if the screen area of the flexible display 130 is enlarged, the graphic user interface program 114 may display a volume setting bar as additional information on a sound item. For another example, if the screen area of the flexible display 130 is enlarged, the graphic user interface program 114 may display an ON/OFF setting item as additional information for a Wireless Fidelity (WiFi) item.

The screen area detection program 115 may determine a screen area and a list area of the flexible display 130. More specifically, the screen area detection program 115 may determine a current screen area of the flexible display 130, and may determine the confirmed current screen area as an original area. In addition, the screen area detection program 115 may determine an area of a currently displayed list, and may determine the confirmed area of the list as a reference area. In this case, the list area may be any dimension such as a width and/or height of the displayed list.

In addition, the screen area detection program 115 may detect a change in the screen area of the flexible display 130. For example, the screen area detection program 115 may detect that the flexible display 130 is folded in half. For another example, the screen area detection program 115 may detect that the flexible display 130 that is folded in half is unfolded. For another example, the screen area detection program 115 may detect that a rolled flexible display 130 is unrolled. Accordingly, the screen area detection program 115 may detect a change in a physical state, shape, position, or any other physical characteristic of the flexible display 130.

In addition, if the screen area of the flexible display 130 is enlarged, then the screen area detection program 115 may compare the enlarged screen area with a predetermined reference area. More specifically, the screen area detection program 115 may determine the enlarged screen area in comparison with an original screen area of the flexible display 130, and may determine whether the enlarged screen area is greater than the reference area. If the screen area of the flexible display 130 is enlarged repetitively several times, then the screen area detection program 115 may calculate the enlarged screen area of the flexible display 130 in an accumulative manner, and may determine whether the calculated area is greater than or equal to the reference area.

In addition, the screen area detection program 115 may determine whether the enlarged screen area of the flexible display 130 is greater than or equal to a threshold area. In this case, the threshold area may be predetermined in the design stage.

The list arrangement program 116 may include instructions for arranging a list according to a change in the screen area of the flexible display 130, as detected by the screen area detection program 115. More specifically, if the screen area of the flexible display 130 is enlarged to be greater than the reference area, then the list arrangement program 116 may display an additional list in the enlarged region of the flexible display 130. In this case, the additional list may be a list which is not displayed in the screen of the flexible display 130 before the screen area of the flexible display 130 is enlarged. For example, if the screen area of the flexible display 130 is enlarged to be greater than the reference area in a state where the list including the items A, B, C, D, E, and F is displayed, then the list arrangement program 116 may additionally display the list including the items G, H, I, J, K, and L in the enlarged region of the flexible display 130.

In addition, if the screen area of the flexible display 130 is enlarged to be less than or equal to the reference area, then the list arrangement program 116 may display additional information according to the enlarged area or may display a currently displayed list by enlarging the list. More specifically, if the enlarged screen area of the flexible display 130 is less than the reference area, then the list arrangement program 116 may compare the enlarged screen area of the flexible display 130 with a predetermined threshold area. If the enlarged screen area of the flexible display 130 is greater than the predetermined threshold area, then the list arrangement program 116 may display the additional information in the enlarged region of the flexible display 130. For example, if the screen area of the flexible display 130 is enlarged to be greater than the predetermined threshold area in a state where a list including a sound item is displayed in the flexible display 130, then the list arrangement program 116 may display a volume setting bar as additional information of a sound item in the enlarged region of the flexible display 130. For another example, if the screen area of the flexible display 130 is enlarged to be greater than the predetermined threshold area in a state where a list including a data usage item is displayed in the flexible display 130, then the list arrangement program 116 may display a data usage amount as additional information of a data usage time in the enlarged region of the flexible display 130.

On the other hand, if the enlarged screen area of the flexible display 130 is less than the predetermined threshold area, then the list arrangement program 116 may display the currently displayed list by increasing a size of the list up to a size of an enlarged region of the flexible display 130. For example, if the screen area of the flexible display 130 is enlarged to be less than the predetermined threshold area, then the list arrangement program 116 may display a list, which is displayed before the screen area of the flexible display 130 is enlarged, by increasing the size of the list up to the size of the enlarged region of the flexible display 130.

Although not shown, the processor 120 may consist of at least one processor and a peripheral interface, and may be a hardware element, such as an integrated circuit. In addition, the processor 120 may execute a specific program, instruction set, and/or module stored in the memory 110 to perform a plurality of specific functions corresponding to the program.

As a display unit which uses a flexible material, such as plastic, polymers, metals, or any other similar and/or suitable flexible material, and which is capable of maintaining a display function even if it is bent like paper, the flexible display 130 may display state information, an indicator, limited alphanumeric characters, moving pictures, still pictures, or any other similar and/or suitable information, generated during an operation of the electronic device 100. In addition, the flexible display 130 may display an image which may be corrected to be seen as a planar image even if the flexible display 130 is bent. In particular, the flexible display 130 according to the present disclosure includes a display unit that can be bent, folded, curved, rolled, or physically manipulated in any other similar and/or suitable manner. In particular, the flexible display 130 according to the present disclosure may change in size under a user control. For one example, the flexible display 130 may be folded in half under the user control and thus may be decreased in size by half. However, the present disclosure is not limited thereto, and the flexible display 130 may be changed in size by any suitable amount of size. For another example, the flexible display 130 may be rolled to one side like a scroll under the user control, and thus may be gradually decreased in size.

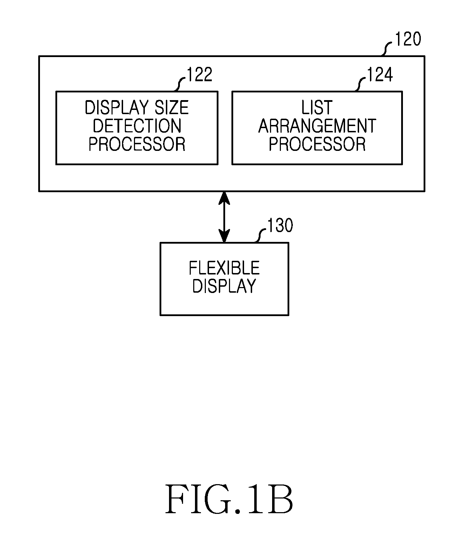

FIG. 1B is a block diagram illustrating a structure of a processor for arranging a list on a basis of a change in a screen area of a flexible display according to an embodiment of the present disclosure.

Referring to FIG. 1B, a processor 120 includes a display size detection processor 122 and a list arrangement processor 124. The screen area detection processor 122 may determine a screen area and a list area of a flexible display 130. More specifically, the screen area detection processor 122 may determine a current screen area of the flexible display 130, and may determine the current screen area as an original area. In addition, the screen area detection processor 122 may determine an area of a currently displayed list, and may determine the area of the list as a reference area. In this case, the list area may be a width and/or height of the displayed list.

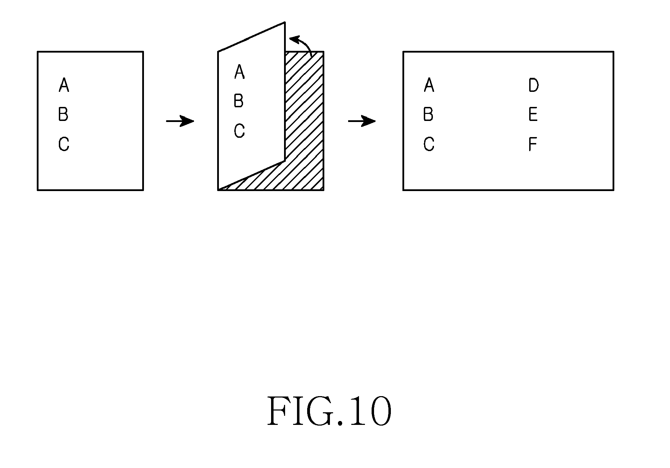

In addition, the screen area detection processor 122 may detect a change in the screen area of the flexible display 130. For example, the screen area detection processor 122 may detect that the flexible display 130 is folded in half. For another example, the screen area detection processor 122 may detect that the flexible display 130 folded in half is unfolded. For another example, the screen area detection processor 122 may detect that a rolled flexible display 130 is unrolled. In addition, the method of detecting the change in the screen area of the flexible display is also described with reference to FIGS. 10, 11, 12, and 13.

In addition, if the screen area of the flexible display 130 is enlarged, then the screen area detection processor 122 may compare the enlarged screen area with a predetermined reference area. More specifically, the screen area detection processor 122 may determine the enlarged screen area in comparison with an original screen area of the flexible display 130, and may determine whether the enlarged screen area is greater than the reference area. If the screen area of the flexible display 130 is enlarged repetitively several times, then the screen area detection processor 122 may calculate the enlarged screen area of the flexible display 130 in an accumulative manner, and may determine whether the calculated area is greater than the reference area.

In addition, the screen area detection processor 122 may determine whether the enlarged screen area of the flexible display 130 is greater than a threshold area. In this case, the threshold area may be predetermined in the design stage.

The list arrangement processor 124 may include instructions for arranging a list according to a change in the screen area of the flexible display 130, detected by the screen area detection processor 122. More specifically, if the screen area of the flexible display 130 is enlarged to be greater than the reference area, the list arrangement processor 124 may display an additional list in an enlarged region of the flexible display 130. In this case, the additional list may be a list which is not displayed in the screen of the flexible display 130 before the screen area of the flexible display 130 is enlarged. For example, if the screen area of the flexible display 130 is enlarged to be greater than the reference area in a state where the list including items A, B, C, D, E, and F is displayed, then the list arrangement processor 124 may additionally display the list including items G, H, I, J, K, and L in the enlarged region of the flexible display 130.

In addition, if the screen area of the flexible display 130 is enlarged to be less than or equal to the reference area, then the list arrangement processor 124 may display additional information according to the enlarged area or may display a currently displayed list by enlarging the list. More specifically, if the enlarged screen area of the flexible display 130 is less than the reference area, the list arrangement processor 124 may compare the enlarged screen area of the flexible display 130 with a predetermined threshold area. If the enlarged screen area of the flexible display 130 is greater than the predetermined threshold area, then the list arrangement processor 124 may display the additional information in the enlarged region of the flexible display 130. For example, if the screen area of the flexible display 130 is enlarged to be greater than the predetermined threshold area in a state where a list including a sound item is displayed in the flexible display 130, then the list arrangement processor 124 may display a volume setting bar as additional information of a sound item in the enlarged region of the flexible display 130. For another example, if the screen area of the flexible display 130 is enlarged to be greater than the predetermined threshold area in a state where a list including a data usage item is displayed in the flexible display 130, then the list arrangement processor 124 may display a data usage amount as additional information of a data usage time in the enlarged region of the flexible display 130.

On the other hand, if the enlarged screen area of the flexible display 130 is less than the predetermined threshold area, then the list arrangement processor 124 may display the currently displayed list by increasing a size of the list up to the enlarged region of the flexible display 130. For example, if the screen area of the flexible display 130 is enlarged to be less than the predetermined threshold area, then the list arrangement processor 124 may displays a list displayed before the screen area of the flexible display 130 is enlarged by increasing the size of the list up to the size of the enlarged region of the flexible display 130.

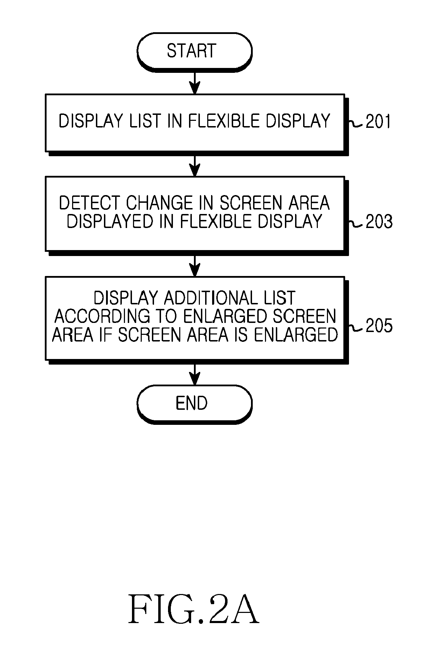

FIG. 2A is a flowchart illustrating a process of displaying an additional list when a screen area of a flexible display is enlarged in an electronic device according to an embodiment of the present disclosure.

A method of detecting a change in the screen area of the flexible display is also described with reference to FIGS. 10, 11, 12, and 13. Referring to FIG. 2A, the electronic device 100 displays a list in the flexible display 130 at operation 201. For example, the electronic device 100 may display a system setting list in the flexible display 130. In this case, the displayed system setting list may include items such as a sound, a display, a data usage, a background screen, a security, and any other similar and/or suitable item to be displayed.

At operation 203, the electronic device 100 detects a change in the screen area displayed in the flexible display 130. In other words, the electronic device 100 determines whether the screen area of the flexible display 130 is enlarged or reduced under a user control. For example, the electronic device 100 may detect that the flexible display 130 is decreased in size when the flexible display 130 is folded in half under the user control. For another example, the electronic device 100 may detect that the flexible display 130 is increased in size when the flexible display is unfolded under the user control from a state of being rolled or being folded in half.

At operation 205, if the screen area of the electronic device 100 is enlarged, an additional list is displayed according to the enlarged screen area. In this case, the electronic device 100 may additionally display a new list in an enlarged region of the flexible display 130 according to the enlarged screen area of the flexible display 130, or may display additional information on a list displayed before the screen area of the flexible display 130 is enlarged.

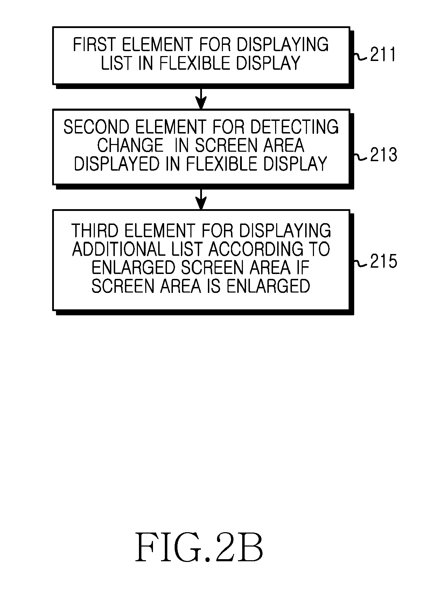

FIG. 2B illustrates an element for displaying an additional list when a screen area of a flexible display is enlarged in an electronic device according to an embodiment of the present disclosure.

Referring to FIG. 2B, the electronic device 100 may include a first element 211 for displaying a list in the flexible display 130. In this case, the electronic device 100 includes the flexible display 130 in which a size and shape of a display unit may be changed under a user control. The flexible display 130 may be a touch screen.

In addition, the electronic device 100 may include a second element 213 for detecting a change in a screen area displayed in the flexible display 130. In this case, the electronic device 100 may include an element for determining a current screen area of the flexible display 130 and an element for determining the changed screen area of the flexible display 130.

In addition, the electronic device 100 may include a third element 215 for displaying an additional list according to the enlarged screen area if the screen area is enlarged. In this case, the electronic device 100 may include an element for displaying additional information for a list in an enlarged region of the flexible display 130 and an element for enlarging and displaying the displayed list.

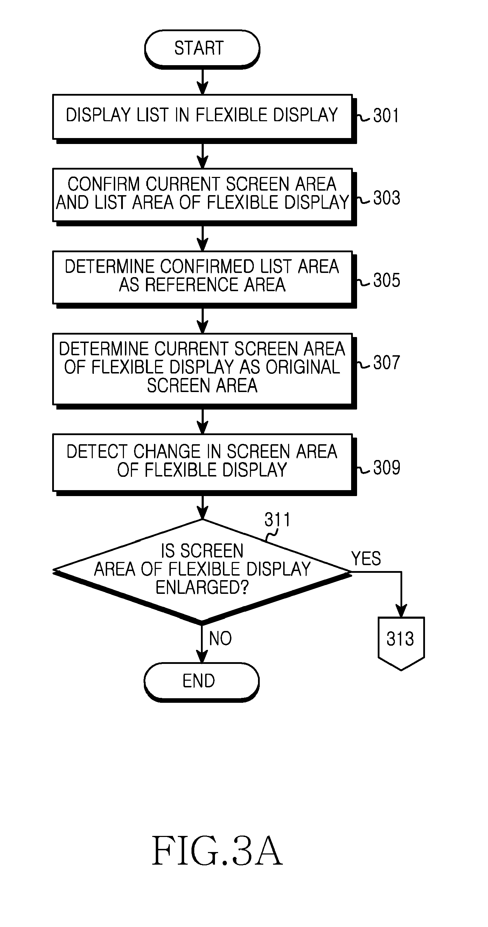

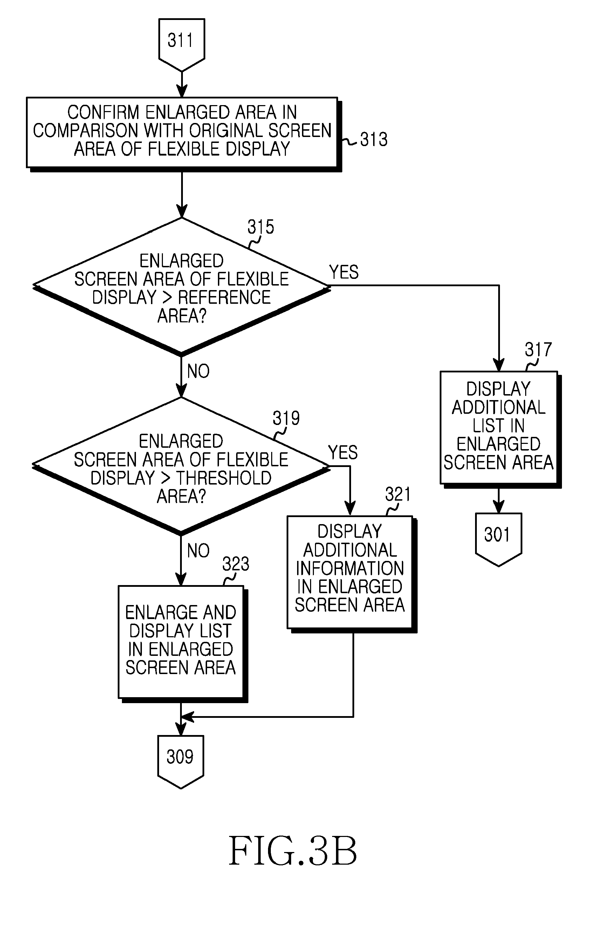

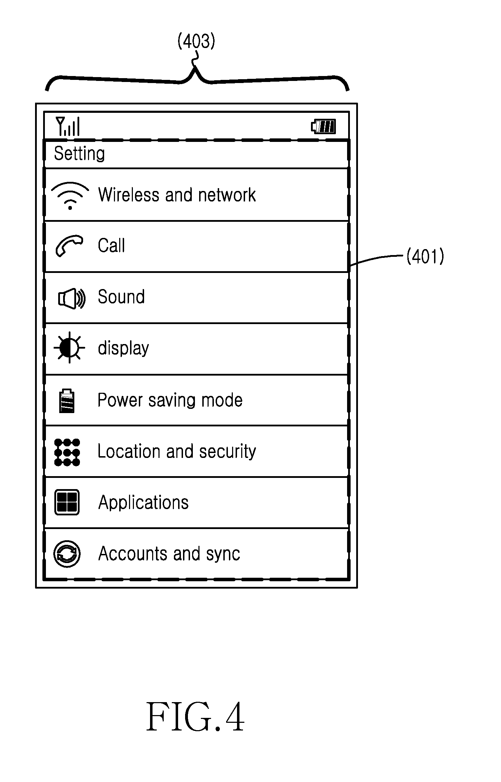

FIGS. 3A and 3B are flowcharts illustrating a process of displaying information based on a change in a screen area of a flexible display in an electronic device according to an embodiment of the present disclosure. FIG. 4 illustrates an example of determining a list and a screen area of a flexible display according to an embodiment of the present disclosure.

Referring to FIGS. 3A, 3B, and 4, the electronic device 100 displays a list in the flexible display 130 at operation 301. For example, the electronic device 100 may display a system setting list in the flexible display 130. In this case, the displayed system setting list may include items such as a sound, a display, a data usage, a background screen, a security, and any other similar and/or suitable item to be displayed.

Thereafter, the electronic device 100 determine a current screen area and a list area of the flexible display 130 at operation 303, and then determines the list area as a reference area at operation 305. Next, the electronic device 100 determines a current screen area of the flexible display 130 as an original area at operation 307. For example, as illustrated in FIG. 4, the electronic device 100 determines an area of a list 401 displayed in the flexible display 130 and a current screen area 403 of the flexible display 130, and thereafter determines the area of the list 401 as the reference area, and determines the current screen area 403 of the flexible display 130 as an original area.

Thereafter, the electronic device 100 detects a change in the screen area of the flexible display 130 at operation 309, and determines whether the screen area of the flexible display 130 is enlarged at operation 311. If the screen area of the flexible display 130 is not enlarged, then the procedure of FIG. 3 ends. Otherwise, if the screen area of the flexible display 130 is enlarged, then proceeding to operation 313, the electronic device 100 determines the enlarged area in comparison with the original area of the flexible display 130. In other words, the electronic device 100 determines how much the screen area of the flexible display 130 is enlarged in comparison with the original area of the flexible display 130.

At operation 315, the electronic device 100 determines whether the enlarged screen area of the flexible display 130 is greater than the reference area.

If the screen area of the flexible display 130 is greater than the reference area, proceeding to operation 317, the electronic device 100 displays an additional list in an enlarged region. Thereafter, returning to operation 301, the subsequent operations are repeated. In this case, if the screen area of the flexible display 130 is enlarged by multiple times as compared to the reference area, then the electronic device 100 may display at least one list according to the enlarged screen area of the flexible display 130.

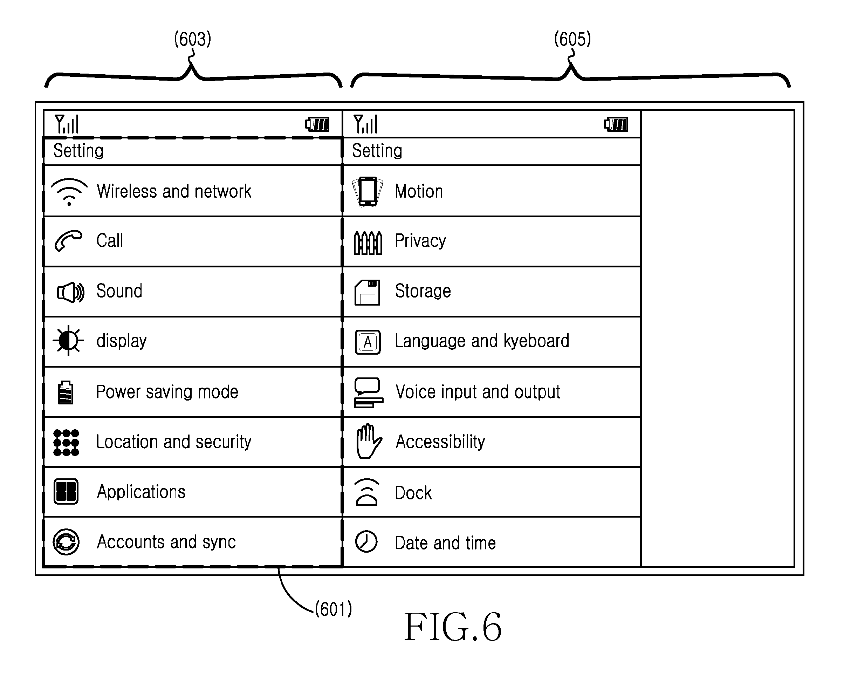

FIG. 6 illustrates an example of a case where an enlarged screen area of a flexible display is greater than a reference area in an electronic device according to an embodiment of the present disclosure.

Referring to FIG. 6, for example, if a screen area 603 of the flexible display 130 is enlarged by two or more times, then the reference area is in a state where a first list 601 is displayed, that is, if an area of an enlarged region 605 of the screen is one or more times larger or greater than the reference area, then the electronic device 100 may display one additional list in the enlarged region 605 of the flexible display. For another example, if the screen area of the flexible display 130 is enlarged by two or more times in a state where the first list is displayed, the electronic device 100 may display two additional lists in the enlarged region of the flexible display 130.

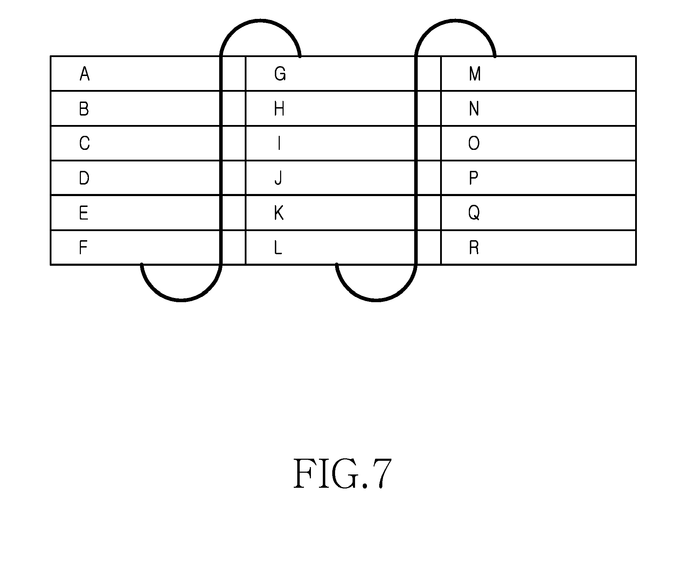

Herein, the additional list may be a list which is not displayed in the flexible display 130 before the screen area of the flexible display 130 is enlarged. For example, as illustrated in FIG. 7, if the additional list is displayed in a state where a list including items A to F is displayed, then the electronic device 100 may display a list including items G to L and a list including items M and R. In this case, the items G to R included in the additional list may be items belonging to the same class or group of the items A to F. For example, if the items A to F correspond to a music file, the items G to R included in the additionally displayed list may be a next-sequenced music file. Of course, according to a design rule, the items G to R included in the additional list may be items belonging to a different class or group of the items A to F.

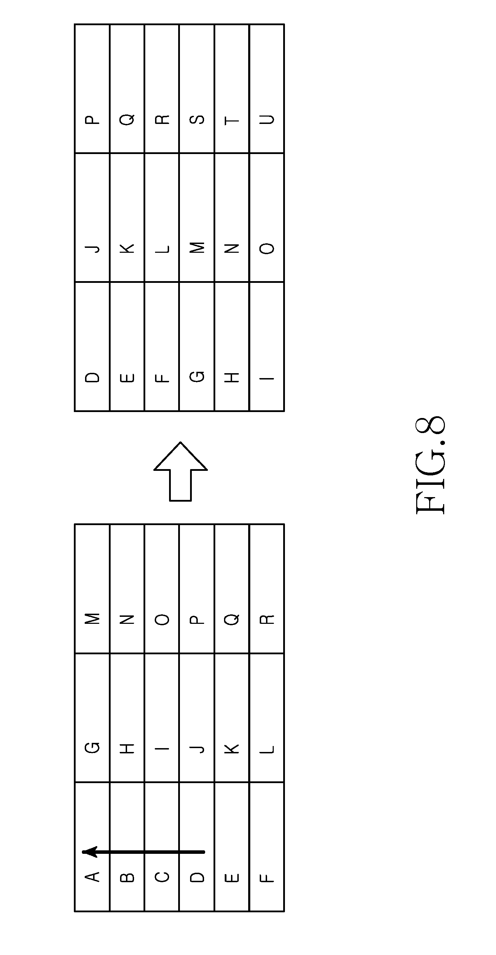

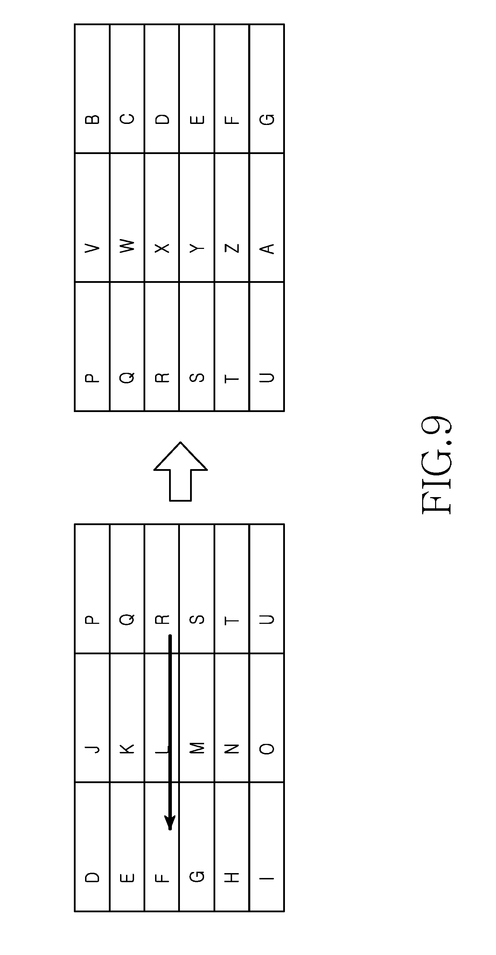

Upon detecting a gesture for moving items included in the list or a gesture for updating the list in a state where the additional list is displayed, the electronic device 100 may control a displayed list according to the detected gesture. For example, as illustrated in FIG. 8, upon detecting a drag for upwardly moving an item D, the electronic device 100 may move the item D to a location, at which a first item is displayed, according to the detected drag, and may sequentially display next items. In this case, apparently, not only items included in a list in which the gesture is detected, but also items included in a list displayed in an enlarged region, are moved together. For another example, as illustrated in FIG. 9, upon detecting a drag for moving a page, the electronic device 100 may display items P to U at a leftmost location of the flexible display 130 according to the detected drag by moving the items to a location at which a first list of the flexible display 130 is displayed, and may sequentially display next-sequenced items, i.e., items V to Z, in an enlarged region. In this case, when there is an extra region capable of displaying an additional item, even if up to the last item is displayed in the enlarged region, a specific number of items may be sequentially displayed in the extra region, where the specific number amounts to the extra region, starting from an item A, which is a first item of a corresponding list in the extra region, as illustrated in FIG. 9.

Meanwhile, if the enlarged screen area of the flexible display 130 is less than or equal to a reference area, then proceeding to operation 319, the electronic deice 100 determines whether the enlarged screen area of the flexible display area is greater than a threshold area.

If the enlarged screen area of the flexible display 130 is greater than the threshold area, then proceeding to operation 321, the electronic device 100 displays additional information in the enlarged region of the screen. In this case, the additional information may be representative information for each of items included in a currently displayed list. For example, if the screen area of the flexible display 130 is enlarged to be greater than or equal to the threshold area, then the electronic device 100 may display a volume setting bar as additional information on a sound item. For another example, if the screen area of the flexible display 130 is enlarged to be greater than or equal to the threshold area, then the electronic device 100 may display ON/OFF as additional information for WiFi. Thereafter, returning to operation 309, the subsequent operations are repeated.

On the other hand, if the enlarged screen area of the flexible display 130 is less than or equal to the threshold area, then proceeding to operation 323, the electronic device 100 displays the currently displayed list by increasing a size of the list up to a size of the enlarged region of the flexible display 130. In this case, if the screen area of the flexible display 130 is less than or equal to the threshold area, then the electronic device 100 may add the same background as a list displayed in the enlarged region of the flexible display 130 and thus may display the list as if the displayed list is enlarged, or may display the list by increasing a size of a text and/or an icon included in the currently displayed list.

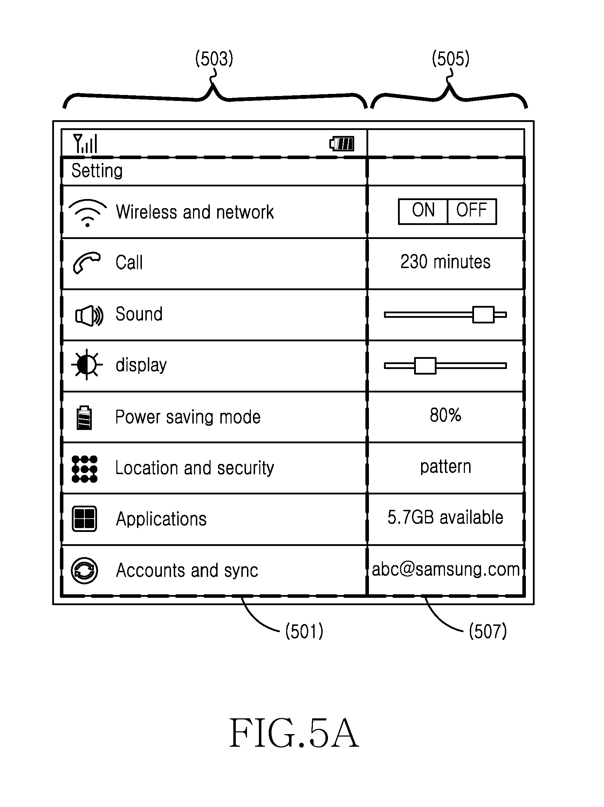

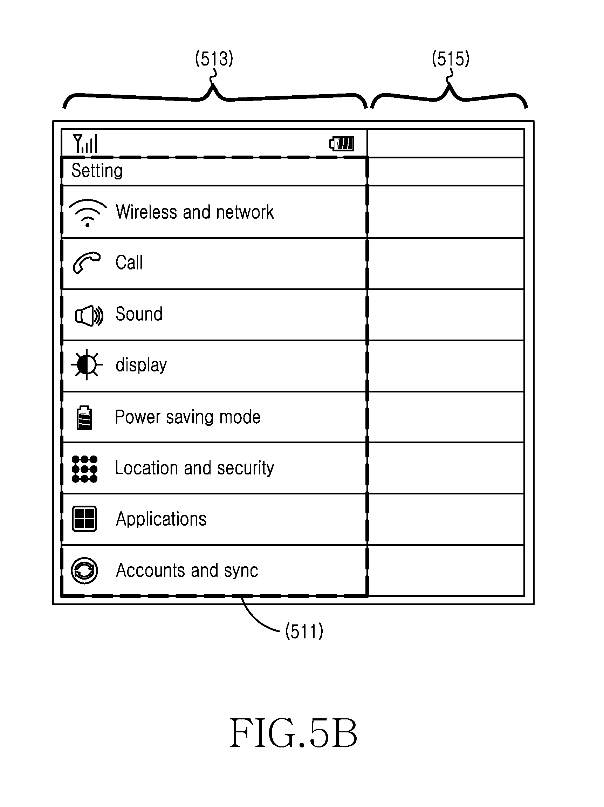

FIGS. 5A and 5B illustrate an example of a case where an enlarged screen area of a flexible display is less than a reference area in an electronic device according to an embodiment of the present disclosure.

Referring to FIG. 5A, for example, if a screen area 503 of the flexible display 130 is enlarged to be greater than or equal to the threshold area in a state where a first list 501 is displayed, then the electronic device 100 may display additional information 507 in an enlarged region 505 of the flexible display. For example, as illustrated in FIG. 5B, if a screen area 513 of the flexible display 130 is enlarged to be less than the threshold area in a state where a first list 511 is displayed, then the electronic device 100 may display the first list 511 by enlarging it up to an enlarged region 515 of the flexible display. Thereafter, returning to operation 309, the subsequent operations are repeated.

FIGS. 10, 11, 12, and 13 illustrate an example of displaying an additional list when a folded flexible display is unfolded in an electronic device according to an embodiment of the present disclosure.

The unfolding of the flexible display may be determined by using a proximity sensor. That is, at least one proximity sensor (not shown) may be provided in a specific region of a rear surface of the flexible display to determine whether the flexible display is unfolded. In other words, if the flexible display is in a folded state, then the proximity sensor recognizes an opposite side of the folded flexible display as an object, and if the flexible display is in an unfolded state, no object is recognized by the proximity sensor since the opposite side of the folded flexible display is not in a detectable range of the proximity sensor. In this manner, whether the flexible display is folded or unfolded may be determined. A plurality of proximity sensors may be used to determine that a part of the flexible display is folded in several folds. Alternatively, in addition to the proximity sensor, a hall sensor or an image sensor may be used to determine whether the flexible display is folded or unfolded. Alternatively, a mechanical switch may be placed at a location at which the flexible display is bent, so that whether the flexible display is in the unfolded state or in the folded state, the state of the flexible display may be recognized according to a state of the switch.

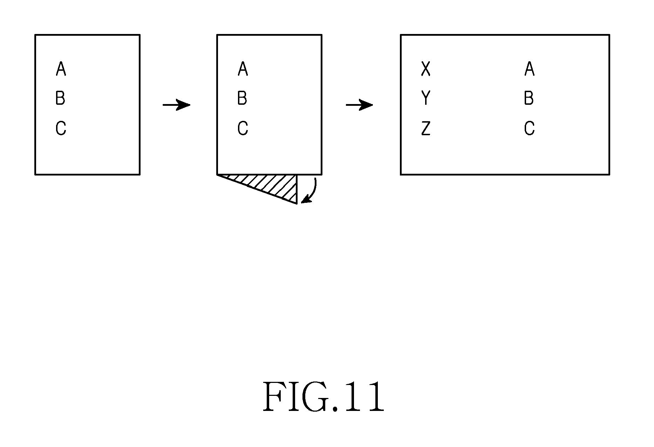

Referring to FIGS. 10, 11, 12, and 13, the electronic device 100 may display an additional list according to the number of times of folding of the flexible display 130 and a direction in which the flexible display 130 is unfolded. For example, as illustrated in FIG. 10, if the flexible display 130 is unfolded in a forward direction, in a state where items A to C are displayed in the flexible display 130 that is folded in half, then the electronic device 100 may display the items A to C at a left region of the unfolded flexible display 130, and may sequentially display next items, i.e., items D to F, at a right region of the unfolded flexible display 130. For another example, as illustrated in FIG. 11, if the flexible display 130 is unfolded in a backward direction in a state where items A to C are displayed in the flexible display 130 that is folded in half, then the electronic device 100 may display the items A to C at a right region of the unfolded flexible display 130, and may sequentially display last items of the list, i.e., items X to Z, at a left region of the unfolded flexible display 130.

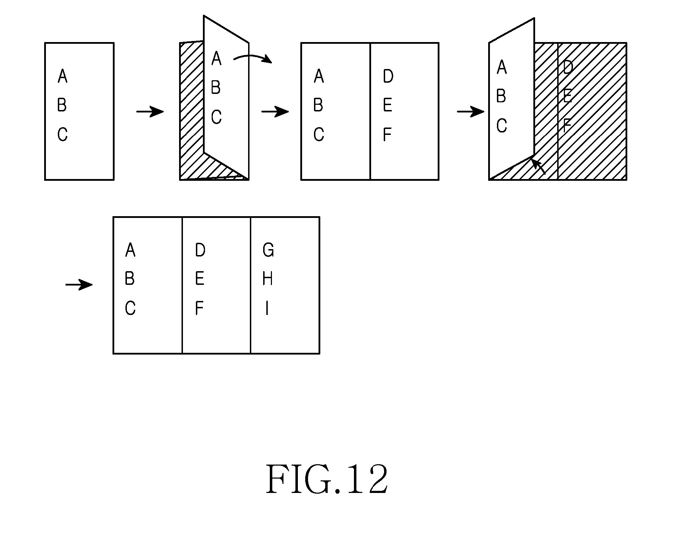

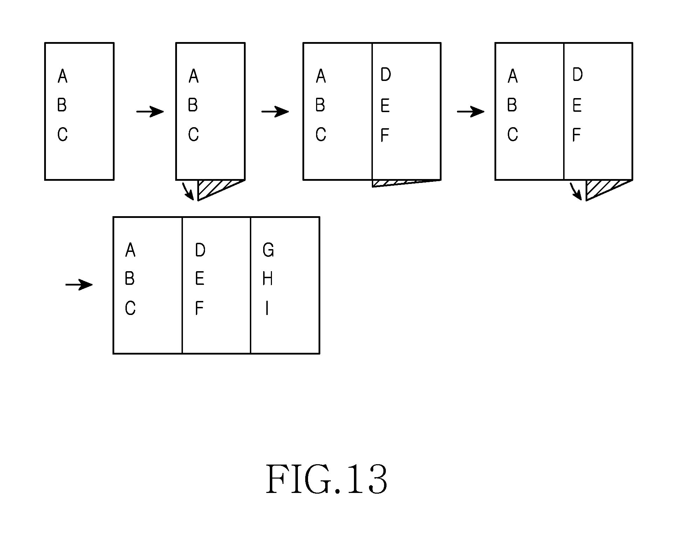

For another example, as illustrated in FIG. 12, if the flexible display 130 is unfolded one time in a forward direction in a state where items A to C are displayed in the flexible display 130 that is folded three times, then the electronic device 100 may display the items A to C at a left region of the unfolded flexible display 130 and may sequentially display next items, i.e., items D to F, at a right region of the unfolded flexible display 130. Thereafter, if the flexible display 130 is unfolded one more time in the forward direction, then the electronic device 100 may display the items A to C at a left region of the unfolded flexible display 130, may display the items D to F at a center region of the unfolded flexible display 130, and may display items G to I at a right region of the flexible display 130. For another example, as illustrated in FIG. 13, if the flexible display 130 is unfolded one time in a backward direction in a state where items A to C are displayed in the flexible display 130 that is folded three times, then the electronic device 100 may display the items A to C at a left region of the unfolded flexible display 130, and may display items D to F at a right region of the unfolded flexible display 130. Thereafter, if the flexible display 130 is unfolded one more time in the backward direction, then the electronic device 100 may display the items A to C at a left region of the unfolded flexible display 130, may display the items D to F at a center region of the unfolded flexible display 130, and may display the items G to I at a right region of the flexible display 130.

In this case, a direction of displaying the additional list may be determined in a design stage according to the number of times of folding the flexible display 130 and the direction of folding the flexible display 130, and may be modified according to a user control.

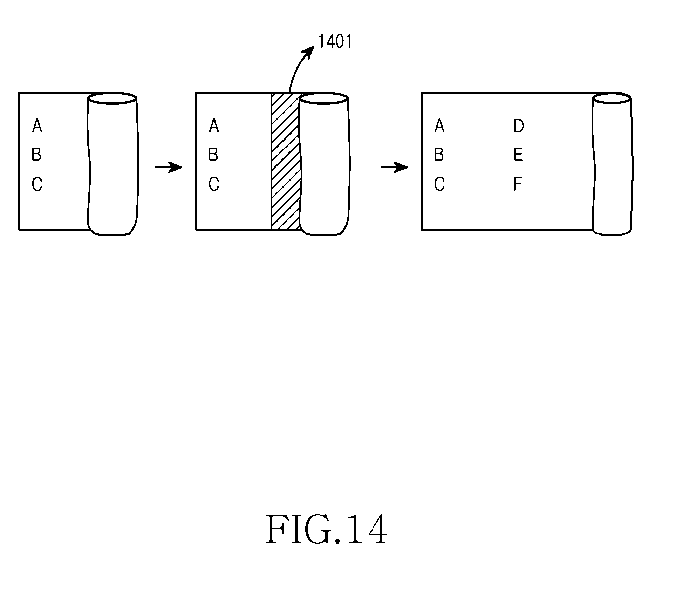

FIG. 14 illustrates an example of displaying an additional list when a rolled flexible display is unrolled in an electronic device according to another embodiment of the present disclosure.

Referring to FIG. 14, the electronic device 100 may display an additional list on the basis of an area of a region in which the rolled flexible display 130 is unrolled. For example, if the rolled flexible display 130 is unrolled in a state where items A to C are displayed in an unrolled region and a right portion of the flexible display 130 is rolled like a scroll, then it may be determined whether an area of a region 1401 in which the flexible display of the electronic device 100 is unrolled is greater than or equal to a reference area. Thereafter, if the area of the unrolled region 1401 is greater than or equal to the reference area, the electronic device 100 may sequentially display items starting from an item D, i.e., an item after the item C, in an unrolled region greater than or equal to the reference area. At least one tension sensor (not shown) may be provided at a specific region of the flexible display so as to detect the area of the unrolled region 1401 by detecting a portion in which the flexible display transitions from an unrolled portion to a rolled portion.

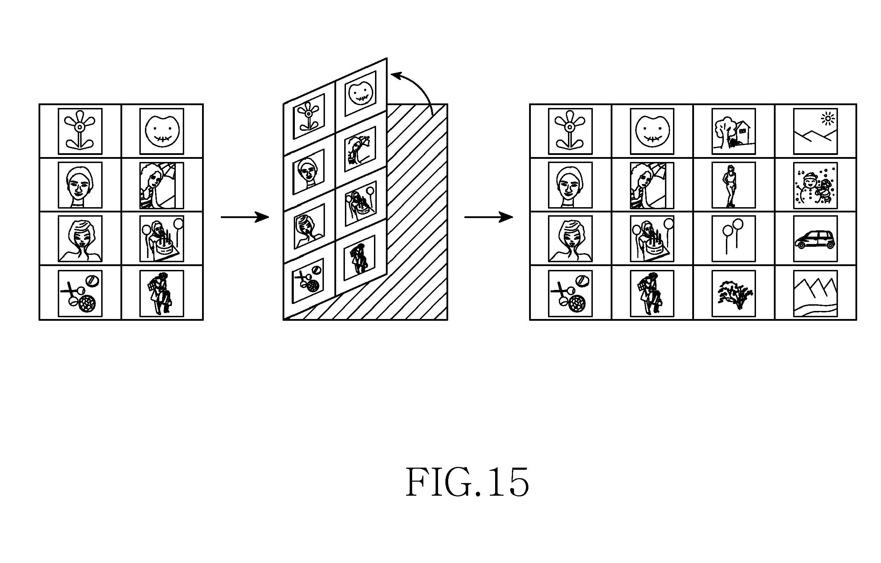

FIGS. 15, 16, and 17 illustrate an example of displaying an additional list when a folded flexible display is unfolded in an electronic device in which a thumbnail image list and an icon list are displayed according to another embodiment of the present disclosure.

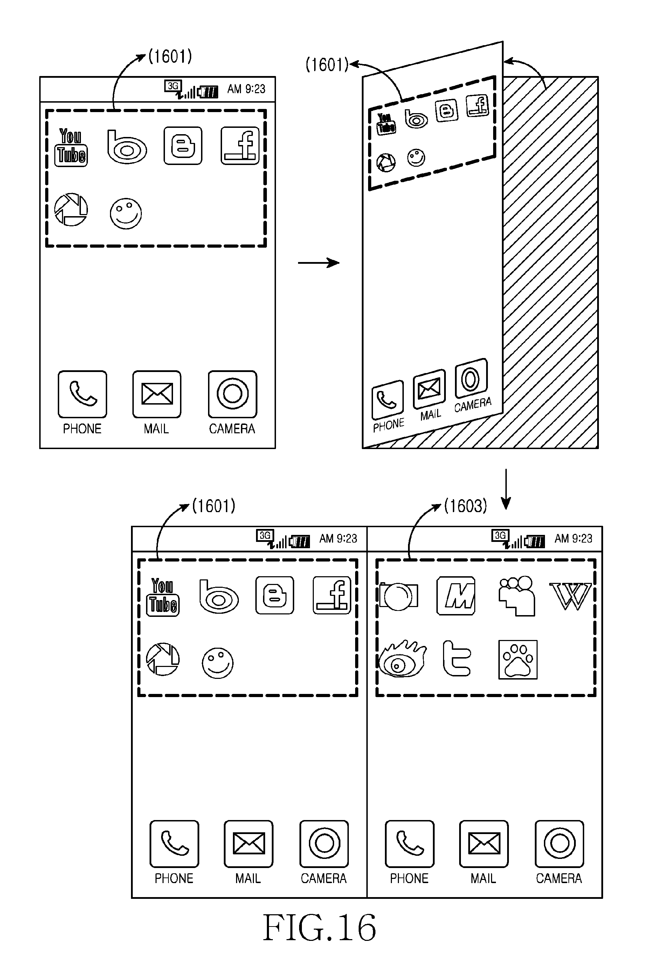

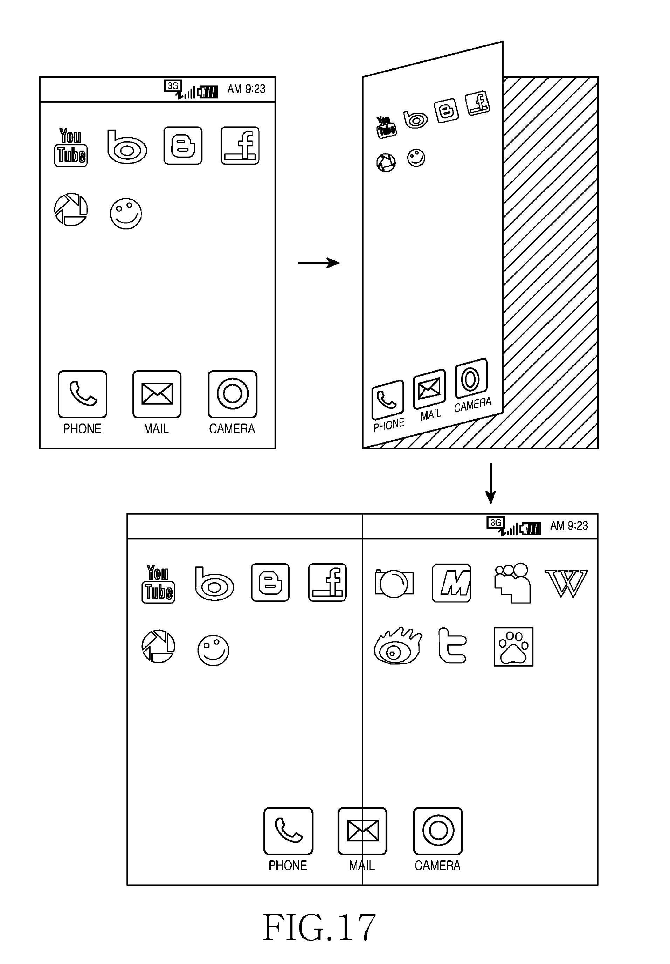

Referring to FIGS. 15, 16, and 17, if a screen area of the flexible display 130 is enlarged in a state where a thumbnail image list or an icon list is displayed, then the electronic device 100 may display an additional thumbnail image list or an additional icon list in an enlarged region. For example, as illustrated in FIG. 15, if the flexible display 130 is unfolded in a forward direction in a state where the thumbnail image list is displayed in the flexible display 130 folded in half, then the electronic device 100 may display a thumbnail image list, which was previously displayed before the flexible display 130 is unfolded, at a left region of the unfolded flexible display 130, and may sequentially display thumbnail images, starting from a next thumbnail image, at a right region of the unfolded flexible display 130. For another example, as illustrated in FIG. 16, if a plurality of home screens including different icon lists are configured in the electronic device 100, when the flexible display 130 is in a state of being folded in half, then the electronic device 100 may display a first home screen including a first icon list 1601, and if the flexible display 130 that is folded in half is unfolded in a forward direction, the flexible display 130 may display the first home screen including the first icon list 1601 at a left region of the unfolded flexible display 130 by moving the first home screen, and may additionally display a second home screen, including a second icon list 1603, at a right region of the unfolded flexible display 130. In this case, as illustrated in FIG. 17, the electronic device 100 may display graphic elements, such as a dock icon and an upper bar icon, displayed equally in the first home screen and the second home screen only one time by re-arranging the graphic elements according to a changed size of the flexible display 130.

As described above, if the flexible display 130 is enlarged, an additional list may be displayed according to a size of the enlarged flexible display 130. However, the present disclosure is not limited thereto. Therefore, if the flexible display 130 is reduced in size, the displayed list may be displayed by decreasing a size of the displayed list according to a size of the reduced flexible display 130.

In addition, although it is described above that a size of a currently displayed list is determined as a reference size, the reference size may be predetermined in a system, or may be determined or modified by a user. In addition, in the above description, a size of a list currently being displayed in the flexible display 130 may be changed according to a user's gesture, such as a touch-and-drag gesture or any other similar and/or suitable gesture.

According to various embodiments of the present disclosure, an electronic device may display a list in a flexible display, and may display an additional list on the basis of a screen area of the flexible display by detecting a change in the screen area of the flexible display. Therefore, when the screen area of the flexible display is enlarged, the electronic device may provide a User Interface/User eXperience (UI/UX) on the basis of the change in the screen area of the flexible display without an additional control.

Various embodiments and all of the functional operations of the present disclosure described in this specification may be implemented in computer software, firmware, or hardware, including the structures disclosed in this specification and their structural equivalents, or in combinations of one or more of them. Furthermore, the various embodiments of the present disclosure described in this specification may be executed by one or more computer program products, i.e., an electronic device, a data processing device, or other similar and/or suitable device, or may be implemented in one or more modules of computer program instructions encoded on a non-transient computer readable medium for controlling an operation of these devices.

The non-transient computer readable medium may be a machine-readable storage medium, a machine-readable storage substrate, a memory device, a composition of matter affecting a machine-readable propagated stream, or a combination of one or more of them. The term "data processing device" includes, for example, a programmable processor, a computer, or multiple processors or all apparatus, devices, and machines for processing data, including the computer. The apparatus may include, in addition to hardware, code that generates an execution environment for the computer program, e.g., code that constitutes processor firmware, a protocol stack, a database management system, an operating system, or a combination of one or more of them.

While the disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of controlling an electronic device, the method comprising:
displaying a list on a flexible display (201);
detecting a change of a screen area displayed in the flexible display (203); and
if the screen area is enlarged, displaying an additional list according to the enlarged area of the screen (205).

2. The method of claim 1, wherein the displaying of the additional list according to the enlarged area of the screen comprises:
determining a reference area with respect to the displayed list;
comparing the enlarged area of the screen with the reference area (315); and
if the enlarged area of the screen is greater than the reference area, additionally displaying a list including at least one item, which is not displayed before the area of the screen is enlarged, in an enlarged region of the screen (317).

3. The method of claim 2, wherein the reference area for the displayed list is determined to be any one of an area predetermined for the displayed list, an area determined by a user, and a width and length of the displayed list.

4. The method of claim 2, wherein the additionally displaying of the list including at least one item, which is not displayed before the area of the screen is enlarged, in the enlarged region of the screen comprises:
determining at least one item included in the displayed list; and
additionally displaying, in the enlarged region of the screen, a list including a next item of a last item from among the determined items.

5. The method of claim 4, wherein the additionally displaying of the list including at least one item, which is not displayed before the area of the screen is enlarged, in the enlarged region of the screen comprises:
determining at least one item to be additionally displayed according to a direction in which the area of the screen is enlarged; and
additionally displaying a list including the determined at least one item in the enlarged region of the screen.

6. The method of claim 1, wherein the displaying of the additional list according to the enlarged area of the screen comprises:
if the enlarged area of the screen is less than a reference area, determining whether the enlarged area of the screen is greater than a predetermined threshold area (319); and
if the enlarged area of the screen is greater than the predetermined threshold area (321), displaying additional information on at least one item included in the list in an enlarged region of the screen,
wherein the additional information is a list including sub-items for at least one item included in the list.

7. The method of claim 1, wherein the displaying of the additional list according to the enlarged area of the screen comprises:
if the enlarged area of the screen is less than a reference area, determining whether the enlarged area of the screen is greater than a predetermined threshold area (319); and
if the enlarged area of the screen is less than a predetermined threshold area, displaying the list by increasing a size of the displayed list up to a size of an enlarged region of the screen.

8. The method of claim 7, wherein the displaying of the list by increasing the size of the displayed list up to the size of the enlarged region of the screen comprises displaying the list by enlarging at least one of an icon and text included in the displayed list.

9. The method of claim 1, further comprising decreasing a size of the displayed list if the area of the screen is decreased.

10. The method of claim 1, wherein the additional list is a list including sub-items for at least one item included in the list.

11. An electronic device (100) comprising:
one or more processors (120);
a flexible display (130);
a memory; and
one or more programs stored in the memory and configured to be executed by the one or more processors,
wherein the one or more programs comprise an instruction for displaying a list on a flexible display, an instruction for detecting a change in a screen area displayed in the flexible display, and if the displayed screen area is enlarged, an instruction for displaying an additional list according to the enlarged area of the screen.

12. The electronic device of claim 11, wherein the one or more programs comprise an instruction for determining a reference area with respect to the displayed list, an instruction for comparing the enlarged area of the screen with the reference area, and if the enlarged area of the screen is greater than the reference area, an instruction for additionally displaying a list including at least one item, which is not displayed before the area of the screen is enlarged, in an enlarged region of the screen.

13. The electronic device of claim 12, wherein the reference area for the displayed list is determined to be any one of an area predetermined for the displayed list, an area determined by a user, and a width and length of the displayed list.

14. The electronic device of claim 12, wherein the one or more programs comprise an instruction for determining an item included in the displayed list and thereafter an instruction for additionally displaying, in the enlarged region of the screen, a list including a next item of a last item among the determined items.

15. The apparatus of claim 11, wherein the apparatus is arranged to implement a method of one of claims 5 to 10.
